# EUROPEAN PATENT SPECIFICATION

(11) **EP 3 659 855 B1**
(45) Date of publication and mention of the grant of the patent: **09.06.2021**
(21) Application number: 18209437.5
(22) Date of filing: 30.11.2018
(51) Int. Cl.: B60N 2/02

(54) **VEHICLE WITH VEHICLE SEAT AND SENSING UNIT**
FAHRZEUG MIT FAHRZEUGSITZ UND SENSOREINHEIT
VÉHICULE DOTÉ D'UN SIÈGE ET D'UNE UNITÉ DE DÉTECTION

(43) Date of publication of application: 03.06.2020
(73) Proprietor: AUDI AG, 85045 Ingolstadt (DE)
(72) Inventor: Müller, Ulrich, 85055 Ingolstadt (DE); Hélot, Jacques, 85051 Ingolstadt (DE)

(56) References cited:
- WO-A2-2007/121977
- DE-A1-102012 216 181

## Description

The invention is concerned with a vehicle comprising a vehicle seat, a foot resting space in front of the vehicle seat, an electronic control unit, an electronic user interface of an infotainment system and a sensing unit.

In an autonomous driving situation of a vehicle, a user or a driver of the vehicle can be able to use or access functionalities of the infotainment system by means of the electronic user interface. Such a user interface can usually be designed as a dashboard and/or a touchscreen that is reachable from a driver seat and/or passenger seat (in general from a vehicle seat). During the autonomous driving situation, though, the user usually adjusts a seating position on the vehicle seat to a comfortable laid back position. However, it is difficult for the user to use or access the different functionalities of the infotainment system by being seated in a laid back position rather than a usual upright position, such as during a manual driving situation, as the user interface is more than an arm length away.

Document DE 10 2012 010 887 A1 discloses a motor vehicle with a control device, which is designed to switch an operating status of an extravehicular computer system for office applications between an active status. The motor vehicle can be autonomously driven and an immersible vehicle pedals can be used to switch using the extravehicular computer system. However, there is no disclosure regarding the assessment of an electronic user interface on an infotainment system.

DE 10 2016 219 795 A1 discloses a control assistance method for a control method for an autonomously driving vehicle comprising the steps of detecting the presence or absence of a takeover situation when autonomously controlling the underlying vehicle and conditionally transferring control functions to an occupant of the vehicle. The Vehicle comprises virtual vehicle pedals which can be used by foot. In the presence of a takeover situation in which one or more gestures of at least the vehicle occupant are detected in the vehicle, a control instruction is detected from one or more detected gestures and from one or more detected control instructions, a sequence of control commands for controlling the vehicle is created and executed as a control function. However, there is no disclosure regarding the assessment of an electronic user interface on an infotainment system.

DE 10 2008 009 427 A1 discloses a method which involves providing a manually or automatically activatable block function for protecting data in an infotainment system of a vehicle. The manual activation of the block function is carried out by pressing of a softkey button, or buttons combination and/or by a voice command. A sub-function of the infotainment system is not usable, if the block function is activated. The automatic activation is carried out after a preset time period of inactivity, or stopping of an engine of the vehicle, and/or leaving the vehicle. Document WO2007121977 discloses a vehicle according to the preamble of claim 1.

It is an object of the present invention to enable a user to access an electronic user interface of an infotainment system and/or of a comfort functionality of a vehicle, especially during an autonomous driving situation, during which the user is seated in a laid back manner on a vehicle seat.

The object is accomplished by the subject matter of the independent claims. Advantageous further embodiments of the invention are specified in the following description, the dependent claims and the figures.

The invention provides a vehicle comprising a vehicle seat and a foot resting space corresponding to or associated with the vehicle seat. The vehicle may be designed to be driven manually by a user sitting on the vehicle seat (driver seat) and steering the vehicle by means of a steering element (e.g. a steering wheel). A driving behavior of the vehicle may be controlled by means of vehicle pedals in the foot resting space, wherein the user can control by pressing the vehicle pedals with a foot on the respective vehicle pedal. The vehicle may provide an autonomous driving functionality for driving the vehicle autonomously, that is without the manual support of a driver. The vehicle seat may be the described driver seat or a passenger seat that does not require means for controlling the driving behavior of the vehicle. The vehicle may comprise an electronic control unit, which is designed to control functionalities of other devices which are integrated in the vehicle, in particular those of an infotainment system and/or of a comfort functionality of the vehicle. In the context of the invention, a comfort functionality especially comprises an air conditioning and/or a heating system of the vehicle interior and/or a seat positioning of said vehicle seat and/or the operation of an electric window winder.

The vehicle comprises an electronic user interface for operating the infotainment system and/or the comfort functionality. A sensing unit is designed to receive a user input, for example from the user, and send a user input signal to the electronic user interface. The user input signal is a function of the user input. This can enable the user to access or operate the infotainment system, for example for selecting a song from a playlist or for selecting a channel from a radio station or for increasing or a decreasing a sound-volume or selecting a video from a video library. The same counts for the comfort functionality.

According to the invention, the said sensing unit is designed to sense a position and/or predefined gesture of a foot as the user input, while the foot lies in the resting space. In other word, the user may move a foot or both feet in the foot resting space and this will be interpreted as the user input for operating the infotainment system and/or the comfort functionality. For example, during an autonomous driving situation, when the vehicle driving autonomously and the user does not have to concentrate on the driving of the vehicle. In this case, the user may adjust the position the vehicle seat to an inclined position, such that the user can be seated in the vehicle seat in a laidback position. In the laid back position, the foot lies in the resting space. The sensing unit is designed to sense the position and/or the predefined gesture of the foot as the user input and send the user input signal to the electronic control unit. This provides the advantage that the user may stay laid back while operating the infotainment system and/or the comfort functionality.

A position sensor of the sensing unit may comprise a mechanical sensing structure, for example based on at least one mechanical switch or key, and/or a touchless sensing device, for example, a camera and/or a laser based sensor and/or a radar based sensor. A mechanical sensing structure implies that the position of the foot is known whenever a switch or a key of the mechanical sensing structure is pressed. Likewise, pressing the switch or key is a predefined gesture that is implicitly sensed. A touchless sensing device may recognize a position and/or gesture on the basis of an image processing unit of the sensing unit.

The invention also comprises embodiments that provide features which afford additional technical advantages.

In one embodiment, the sensing unit can comprise a position sensor which is designed to determine the position of the foot when the foot is lying in the foot resting space, based on which the control unit is designed to position a cursor on the electronic user interface, wherein the position of the cursor corresponds to the position of the foot. In other words, based on the determined position the control unit may be designed to set a position signal to generate and position the cursor on the electronic user interface, wherein the position of the cursor corresponds to the position of the foot. The electronic user interface can be a display panel comprising a graphical user interface (GUI), such as, e.g., the cursor and/or functionality buttons. The position sensor may comprise a touchless sensing device, e.g. the described camera and/or laser-based senor. The position sensor may determine the position of the foot and send the position signal to the control unit which in turn can set or position the cursor on the display panel of the electronic user interface. The cursor can be viewed, for example by the user during the autonomous driving situation, and the user can move his foot to navigate the cursor on the display panel to a desired functionality button. This is of advantage, because it can enable an comfortable navigation of the cursor on the electronic control unit by the user using his feet.

In one embodiment, an outer contour of the foot in the foot resting space may be displayed on the electronic user interface by means of the sensing unit, wherein the position of the outer contour correspond to the position of the foot. In other words, the sensing unit can comprise a position sensor which is designed to determine the position of the foot when the foot is lying in the foot resting space. Based on the determined position the control unit may be designed to set a position signal to generate and position an image of an outline of the corresponding foot on the electronic user interface, wherein the position of the outer contour correspond to the position of the foot. This is of advantage, because it can assist a comfortable positioning of the foot in the foot resting space in order to access a specific functionality button on the electronic user interface.

In one embodiment, the position sensor may be designed to sense the predefined gesture of the foot lying in the foot resting space, based on which the position sensor is designed to send a functionality signal to the electronic user interface for triggering a function associated with the predefined gesture. In other words, the predefined gesture can be provided, for example a flapping of the foot in a forward direction away from the leg or a tapping-down of the foot, and the gesture may be sensed as a signal to trigger or start an associated function, e.g. selecting a functionality button that a cursor is positioned upon or stating a motor of the vehicle seat. This is of advantage, because it can enable an comfortable accessing of the electronic user interface by the user. Furthermore, the sensing unit may be designed to sense the predefined gesture of the foot either mechanically or by means of a pressure sensing or by means of a movement sensing, for example, a double tap movement of the foot. It is further thinkable, that a projection unit is provided, e.g. a laser based projection unit, which can generate images of functionality buttons and/or symbols on a vehicle floor in the foot resting region, such that the user can move a foot on a respective virtual image or bring the foot in a line of focus of the projected light, such that the respective image is formed on the foot. This help identifying the correct position for triggering a specific function.

In one embodiment, the sensing unit can be located in the foot resting space and comprises a display panel, wherein the display panel is designed to display at least one graphical key structure. In other words, the display panel may comprise a pixel matrix and/or symbols that may be illuminated. The display panel can be a thin film transistor display (TFT) or a liquid crystal display or an organic light emitting diode display (OLED) or an array of light emitting diodes, similar to those used in buses, as this is less expensive and a display of symbols can be realized by means of LEDs. This is of advantage, because such a display panel can enable the user to view the plurality of digital key structures corresponding to different functionalities by means of different monochromatic images or colored images. Furthermore, due to the radiating light by the pixel matrix of the display panel, the user would be able to easily view and identify respective digital key structure. Furthermore, each of the plurality of digital key structures may be designed to trigger the user input signal in accordance with a touch and/or pressure on the respective digital key structure. In other words, the foot can be touched providing the touch signal on the corresponding respective digital key structure to trigger the corresponding user input signal to the electronic user interface.

In one embodiment, a functionality of the respective digital key structure is variable in accordance with a current operation mode of the infotainment system and/or comfort functionality. In other words, different functionalities can be chosen by means of a same set of digital key structures. This is of advantage, because this enables a respective graphical key structure to display more than one functionality as per requirement, for example by the user accessing the electronic user interface of the infotainment system and/or the comfort functionality, this in turn leads to a reduction in the number of digital key structures in a limited space such as in the foot rest region. Another term for this feature is "soft keys".

In one embodiment, the sensing unit can be located in the foot resting region and can comprise a plurality of key structures, wherein each of the plurality of key structures are designed for triggering a respective function associated with the respective key structure. The key structures can be, for example mechanical keys or buttons, e.g. similar to the known key structures in a computer key board or push buttons. In other words, the user may press the respective key structures by means of a foot in order to select a respective functionality of the electronic user interface. This is of advantage, because this enables a robust mechanical sensing unit. Furthermore, the key structures can be in the shape of flat buttons, or inclined buttons or hemi-spherical buttons. The key structures can be in form of mechanical buttons which can be immersive in a compartment in the vehicle floor. In other words, the mechanical key structures may be lowered in a deactivated position (for not obstructing the feet of the user) and they may be raised in an activated position (for receiving the user input). However, other shapes or technologies which could be known to a person with ordinary skill in the related field can be used key structures. Alternatively, the buttons can be raised but mechanically blocked, when they are not supposed to work, for example when the vehicle is driven manually by the user sitting on the vehicle seat.

In one embodiment, the electronic control unit can be designed to adjust an angle inclination of the plurality of key structures to the vehicle floor in accordance with an angle of inclination of the vehicle seat to the vehicle floor. In other words, for example during an autonomous driving situation, the user can enable an adjustment in the inclination of the vehicle seat e.g. as per comfort, for example by means of a seat adjustment console on the middle console beside the vehicle seat, upon which the seat adjustment console can send a seat adjustment signal comprising information regarding the angle of inclination of the vehicle seat to the vehicle floor. The electronic control unit at the same time can send a key adjustment signal to enable at least one key actuator, for example an electric motor or a servo-motor, to adjust the angle of inclination of the plurality of key structures to the vehicle floor in accordance with the angle of inclination of the vehicle seat to the vehicle floor. This is of advantage, because this can enable the user to have a constant comfortable view of the key structures, so that the key structures can be pressed by means of his foot in a comfortable manner irrespective of the position of the vehicle seat.

In one embodiment, during a manual driving situation, the electronic control unit is designed to deactivate the sensing unit by sending a deactivation signal. This is of advantage, because during the manual driving situation the feet of the user are engaged in using the vehicle paddles. Moreover, during driving manually the user is in an upright position, hence, he can access the electronic user interface by means of his hands, for example by touch. Hence, during the manual driving situation, the electronic control unit may deactivate the sensing unit, for example, by deactivating the position sensor and/or by switching off the display panel or by locking the key structures, such that they are not movable or pressable by means of the feet. Furthermore, during the autonomous driving situation, the electronic control unit may be designed to activate the sensing unit by sending an activation signal. This is of advantage, because the user can be able to access the electronic user interface in comfortable manner by means of the sensing unit using a foot.

In one embodiment, the vehicle comprises a docking station which is designed to mechanically support or receive or cover the sensing unit. This can enable the sensing unit to be protected from mechanical wear and/or jerking motion of the vehicle and to be held in a position as designed.

In one embodiment, the docking station may comprise a lid which is designed to cover the sensing unit as a function of a covering signal sent by the electronic control unit, wherein the electronic control unit is designed to send the covering signal according to a predefined driving situation, e.g. a manual driving situation. In other words, the lid can provide coverage or protection of the sensing unit, for example, the position sensor or the key digital panel or the key structures, so that the sensing unit is not usable during the manual driving. Furthermore, during the autonomous driving situation, the electronic control unit is designed to enable an uncovering of the sensing unit by means of an uncovering signal to the docking station, for example the lid can be slid back exposing the sensing unit to be used.

The inventive vehicle can be a motor vehicle, like, e.g., a passenger vehicle or a truck.

The invention also comprises embodiments that provide features which afford additional technical advantages.

In the following an exemplary implementation of the invention is described. The figures show:
- Fig. 1: a schematic illustration of a perspective view of an inside of a vehicle according to the invention;
- Fig. 2: a schematic illustration of two perspective views on a sensing unit of the vehicle in an activated position and a deactivated position;
- Fig. 3: a schematic illustration of a perspective view on a sensing unit of a different embodiment together with a sketch of a contour of a single key structure;
- Fig. 4: a schematic illustration of a perspective view on a sensing unit according to a different embodiment;
- Fig. 5: a schematic illustration of a perspective view on a sensing unit of another embodiment with two different graphical key structures displayed on the sensing unit;
- Fig. 6: a schematic illustration of a sectional view of the key structure;
- Fig. 7: a schematic illustration of a perspective view on another embodiment of the vehicle with a touchless a sensing unit; and
- Fig. 8: a schematic illustration of a perspective view on an electronic user interface displaying selectable functions.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

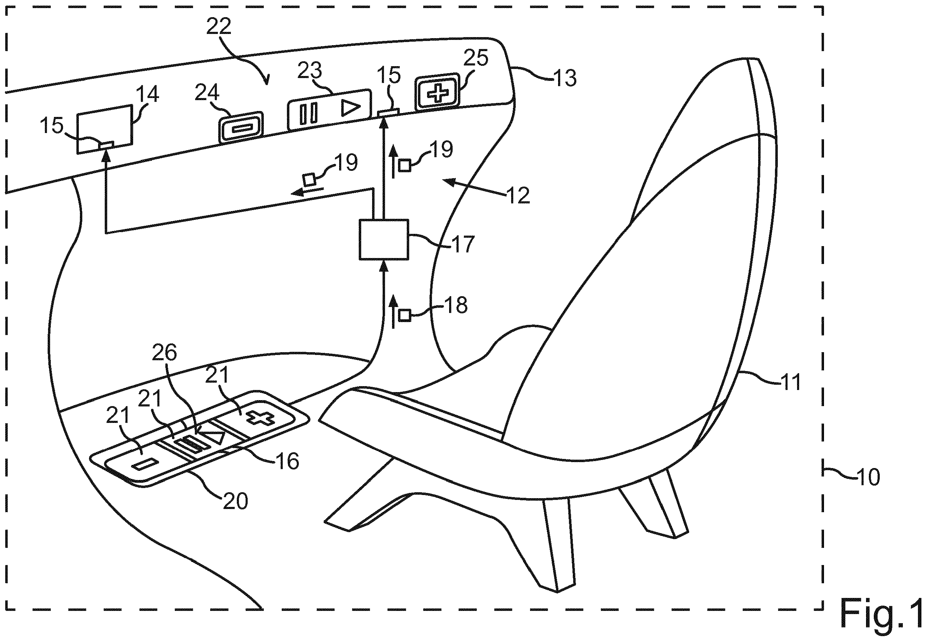

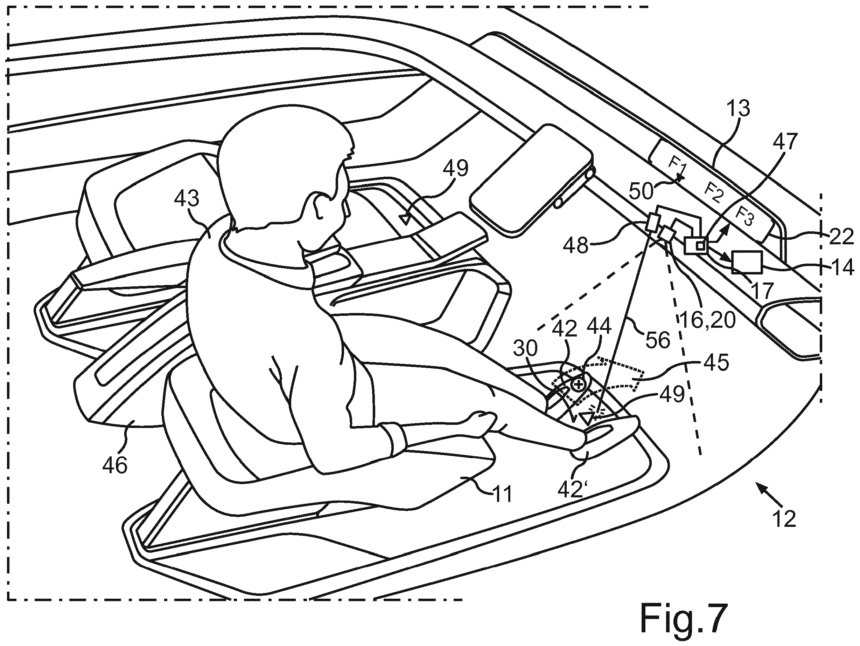

Fig. 1 shows a vehicle 10 that can be, e.g., a motor vehicle, like, for example, a passenger vehicle or a truck or a bus. The vehicle 10 may comprise a vehicle seat 11, that can be a passenger seat or a driver's seat. A person or a user 43, as shown in Fig. 7, using the vehicle seat 11 may rest his feet 42, 42' in a foot resting space 12 that may be arranged or located in front of the vehicle seat 11. An infotainment system 13 of the vehicle 10 may provide infotainment functionalities, like, e.g. playing a media content, e.g. music and/or video, and/or listening to a radio and/or surfing internet and/or telephoning. Additionally or alternatively, a comfort functionality 14 may provide air conditioning for a vehicle interior and/or heating and/or a seat positioning for vehicle seat 11. For selecting or operating the respective functions or features of the infotainment system 13 and/or the comfort functionality 14, the infotainment system 13 and/or the comfort functionality 14 may each provide a respective electronic user interface 15. By means of the respective electronic user interface 15, the user 43 may select or activate one out of the several functions offered or provided by the infotainment system 13 and/or the comfort functionality 14.

In the vehicle 10, the user 43 sitting on the vehicle seat 11 may operate the respective electronic user interface 15 using the foot 42 or both feet 42, 42'. To this end, a sensing unit 16 may be provided for the foot resting space 12, wherein the sensing unit 16 may be designed to receive a user input and send a user input signal 18 to the electronic user interface 15. For processing the user input signal 18 provided by the sensing unit 16, an electronic control unit 17 may be provided that may receive the user input signal 18 from the sensing unit 16 and that may determine a position and/or a predefined gesture of the foot 42 of the user 43 on the basis of the user input signal 18. Based on the position and/or gesture determined or recognized on the basis of the user input signal 18, the electronic control unit 17 may trigger or select a function in the infotainment system 13 and/or comfort functionality 14. The respective function may be associated with a specific position and/or gesture of the foot 42. The respective function may be selected or activated or triggered at the respective electronic user interface 15 by the electronic control unit 17. To this end, a respective function selection signal 19 may be provided by the electronic control unit 17 at the respective electronic user interface 15.

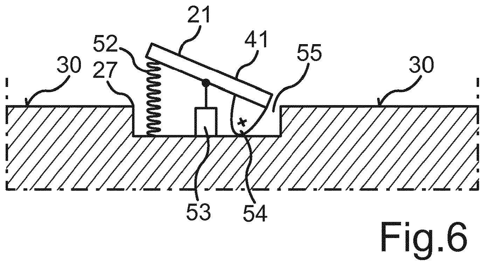

Fig. 1 shows that the sensing unit 16 may provide at least one position sensor 20. A position sensor 20 may be provided in the form of a key structure arrangement with several key structures 21 that may be pressed down by the foot 42 of the user 43 for selecting the respective function associated with the respective key structure 21. When the foot 42 presses down a specific key structure 21, the sensing unit 16 implicitly knows or identifies a position of the foot 42, and the gesture of pressing down the key structure 21 indicates that the user 43 wants to select the associated function. Furthermore, when pressing down the key structure 21 by means of the foot 42, the user 43 may realize or feel a force acting in an opposite direction to that corresponding to the pressing down of the key structure 21 by means of the foot 42, for example, due to an internal spring 52, as shown in Fig. 6, integrated in the respective key structure 21. When the key structure 21 may be pressed down by a predefined distance, then the user 43 may realize a haptic effect, which may signal that a function has been actuated.

Fig. 1 illustrates that, for example, the infotainment system 13 may comprise a display screen 22 for graphically indicating to the user 43 seated on the vehicle seat 11 which key structure 21 is associated with which function. The example shown indicates that one key structure 21 may be for pausing/playing 23, one key structure 21 may be for lowering a playback volume 24 and/or one key structure 21 may be for increasing the playback volume 25. The association of a key structure 21 with a specific function may be changed depending on a current operation mode of the electronic user interface 15 or the infotainment system 13 or the comfort functionality 14.

The sensing unit 16 itself may provide an optical or graphical indication for indicating which position and/or which gesture is associated with which specific function of the infotainment system 13 and/or comfort functionality 14. To this end, for example, the position sensor 20 may comprise a display panel 26 or, in the case of several separated key structures 21, a respective display panel 26 for each key structure 21. On the at least one display panel 26, a graphical indication, for example, a symbol and/or a text, may be displayed for signaling the associated function. The display panel 26 may be based on a pixel matrix, e.g. based on OLED-technology (OLED - organic light emitting diode), and/or a panel with a backlight illumination, wherein the panel comprises a contour or through hole in the shape of the respective symbol. The display panel 26 can additionally show, where the feet 42, 42' of the user 43 are positioned in the foot resting space 12, so that it is easier for the user 43 to know which specific key structure 21 to press or select.

The position sensor 20 of the sensing unit 16 may be based on at least one mechanical switch and/or a touchpad.

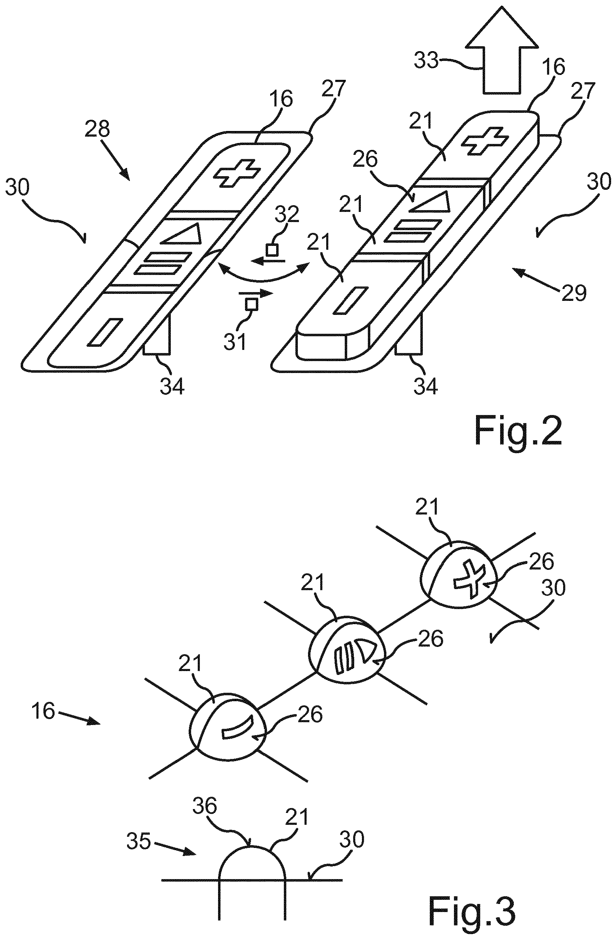

Fig. 2 illustrates, how the sensing unit 16 may be arranged in a docking station 27 for supporting the at least one position sensor 20 of the sensing unit 16. Fig. 2 shows the sensing unit 16 twice, namely, in a deactivated state 28 and an activated state 29. The docking station 27 may provide a chamber 55 or slot, as shown in Fig. 6, in which the sensing unit 16 may be housed or placed in the deactivated state 28, such that the sensing unit 16 is positioned lower than or at level with a vehicle floor 30 of the foot resting space 12. In the deactivated state 28, the sensing unit 16 may be also covered by a lid of the docking station 27 (not shown in the figures).

In the activated state 29, the sensing unit 16 may be elevated or raised, such that the sensing unit 16 may extend into the foot resting space 12. The key structures 21 may thus be raised over or higher than the vehicle floor 30 of foot resting space 12. For a switching between the deactivated state 28 and the activated state 29, the electronic control unit 17 may send an activation signal 31 for switching into the activated state 29 and a deactivation signal 32 for switching into the deactivated state 28. For a mechanical movement 33 of the sensing unit 16 for elevating the sensing unit 16 out of the docking station 27, an actuator unit 34 may be provided that can be based, e.g., on an electric motor.

Fig. 3 shows a sensing unit 16 with a position sensor based on key structures 21 in a hemi-spherical shape. The user 43 may step on such a hemi-spherical key structure 21 for selecting or triggering a respective associated function of the infotainment system 13 and/or comfort functionality 14. Fig. 3 also comprises a sectional view 35 for illustrating a hemi-spherical outer contour 36 of one of the key structure 21.

On a key structure 21, the display panel 26 may be provided on the basis of a pixel matrix and/or on the basis of a respective illuminated symbol, as has already been described.

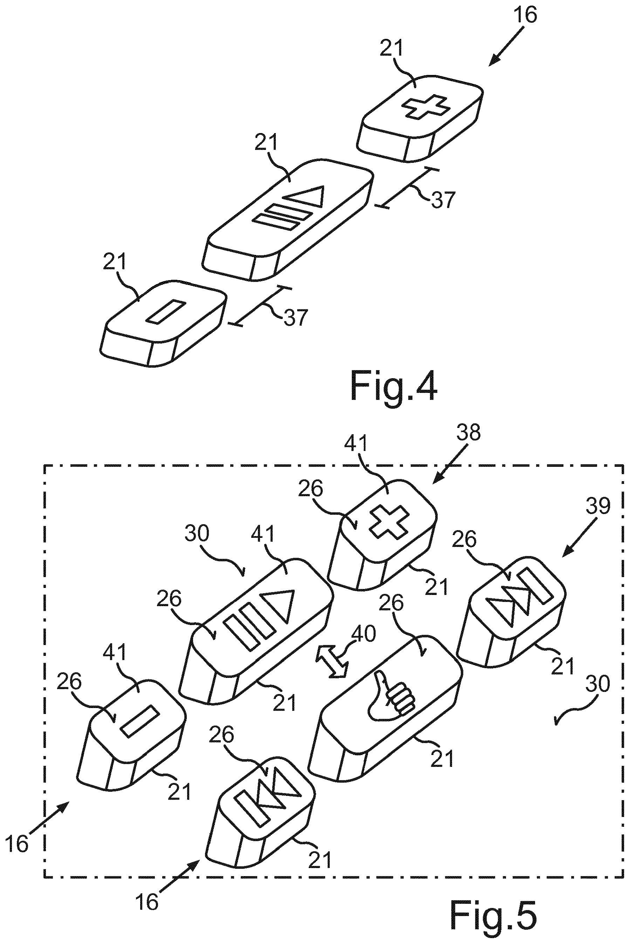

Fig. 4 illustrates a sensing unit 16 with separated key structures 21 that are arranged at a spatial distance 37 from each other. The spatial distance 37 can be in the range of 2 cm to 20 cm. The spatial distance 37 provides the advantage that the user 43 will not accidently tap two key structures 21 at a same time, when only one key structure 21 shall be pressed.

Fig. 5 illustrates the sensing unit 16 with separated key structures 21 that may each provide a respective display panel 26 for displaying or signaling at least one symbol and/or text for indicating which function is associated with the respective key structure 21. Fig. 5 shows two different states of sensing unit 16, wherein each state corresponds to a respective operation mode 38, 39 of the infotainment system 13 and/or the comfort functionality 14 that may be operated by means of the sensing unit 16. When a change 40 between the two operation modes 38, 39 is signaled by the infotainment system 13 and/or comfort functionality 14, the display content of the respective display panel 26 of the key structures 21 may be changed or switched accordingly. This may be controlled by the electronic control unit 17.

Fig. 5 also illustrates an independent aspect regarding an inclined surface 41 of the key structures 21. The surfaces 41 of the key structures 21 may be arranged at an angle larger than zero regarding the vehicle floor 30. An angle of the inclination may be variable and may set according to a control signal (not shown in the figures) that may be generated by electronic control unit 17. For example, the control signal may be generated as a function of or an angle of inclination of vehicle seat 11. For varying or setting the angle of inclination of the surface 41, the sensing unit 16 may provide a corresponding angle actuating unit 53, that may be based, for example, on an electric motor, as shown in Fig. 6. The surface 41 may be inclined at a selected angle of inclination about a hinge 54 on one side in the chamber 55, whereas the surface 41 may be supported by the internal spring 52 on the other side.

Fig. 7 illustrates how the control or operation of the infotainment system 13 and/or comfort functionality 14 may be based on the sensing unit 16 with a touchless position sensor 20 for sensing the position and/or gesture of the foot 42 of the user 43 in the foot resting space 12 of the vehicle seat 11. Fig. 6 illustrates an example, where the user 43 positions his foot 42 at a specific position 44 and/or moves his foot 42 according to a predefined gesture 45 for operating a comfort function of comfort functionality 14, wherein, in the example, the comfort function 46 may be the movement or adjustment of vehicle seat 11. For example, for declining the vehicle seat 11, the user 43 may move the foot 42 forward as the gesture 45.

The touchless position sensor 20 may be based on a camera and/or a laser based sensor, e.g. a LIDAR, and/or a radar based sensor. The electronic control unit 17 may operate or execute an image processing module 47, which can be, for example, a software module for a processing unit of the electronic control unit 17. The processing unit can be based on at least one microprocessor and/or at least one microcontroller.

For indicating to the user 43 where the foot 42 shall be positioned, that is for indicating the correct position 44 for triggering or selecting a specific function of the infotainment system 13 and/or the comfort functionality 14, a projection unit 48 may be provided, that can be based on, e.g., a laser projector. Projection unit 48 may generate a projected symbol 49 on the basis of projected light 56. The projected symbol 49 may be projected on the vehicle floor 30 of the foot resting space 12.

Like in the case of the respective display panel 26, the projected symbol 49 may be changed or adapted according to a current operation mode of the infotainment system 13 and/or comfort functionality 14.

Fig. 7 also shows, how on a display screen 22 the user 43 may be informed or signaled which current position 44 has been detected by electronic control unit 17. For example, an indicator or cursor 50 may indicate which out of several selectable functions F1, F2, F3, the user 43 would operate with gesture 45, if the user 43 started gesture 45 at that position 44. Furthermore, the size of the selectable functions F1, F2, F3 on the display screen 22 or the electronic user interface 15 may be smaller. Upon the positioning of the cursor 50 one of the selectable functions F1, F2, F3, the size of the corresponding selectable function, for example, F1, can grow on the electronic user interface 15. This may enable a better readability of the respective selectable function F1. Furthermore, upon actuation of the selectable function F1, the selectable functions F1 may shrink. Hence, this can enable a comfortable selection and actuation of the selectable functions F1, F2, F3.

Like the examples show, foot pedal like key structures 21, and/or a position and/or gesture recognition as may be performed by the image processing module 47 allow the operation of an infotainment system 13 and/or comfort functionality 14 even when the vehicle seat 11 may be arranged in a laidback position. Functions like: next song/video, volume up/down, like/dislike and accept/reject telephone call can be controlled by positioning the foot 42 at a specific position and/or by performing a specific gesture 45 with the foot 42 or both feet 42, 42'.

For example, during an autonomous driving mode of vehicle 10, when the vehicle seat 11 may be positioned in a "relaxed position". That is in a laid back position, the sensing unit 16 for sensing the position and/or predefined gesture of at least one foot 42 is reachable for the user 43 sitting or lying in the vehicle seat 11.

The paddle or key structures 21 of the sensing unit 16 can be retractable or extendable (see Figure 2). Each key structure 21 can be optionally associated with more than one function (that is soft-key functionality as illustrated in Figure 5). The current function associated with the key structure 21 or paddle can be displayed on the key structure 21 or the paddle itself and/or on the display screen 22. The display screen 22 may be activated when the foot 42 approached the respective paddle or key structure 21, that is when the distance between the foot 42 and the paddle or key structure 21 is lower than a predefined threshold.

As illustrated, the key structures 21 or paddles can have different shapes.

It may also be envisaged to project a symbol or symbols 49 on the vehicle floor 30. A position 44 and/or gesture 45 may be recognized with a touchless sensor, e.g. a camera. Interacting with the foot 42 by placing the foot 42 at a specific position 44 and/or by performing a specific gesture 45, it may then be possible even with the foot 42 not touching any object.

In the case of changing the angle of inclination of the back rest of vehicle seat 11, reclining the vehicle seat 11 may be based on a gesture 45 where the user 43 pushes the foot 42 forward. The more the vehicle seat 11 reclines the easier it gets to push, because of the center of gravity of a body of user 43 moves backwards.

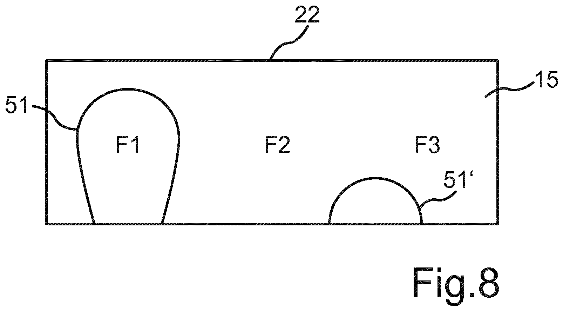

Fig. 8 shows an outer contour 51 of a portion the foot 42 in the foot resting space 12 which is displayed on the electronic user interface 15 by means of the sensing unit 16, wherein the position of the outer contour 51 correspond to the position 44 of the foot 42. Furthermore, outer contours 51, 51' of portions of the respective feet 42, 42' may be displayed on the electronic user interface 15. As shown in Fig. 8, the selectable function F1 may be selected by the user 43 by means of the foot 42, as seen by the outer contour 51 of the portion of the foot 42.

Overall, the example shows how a control element for feet 42; 42' is provided that allows operating an electronic user interface 15 even in a laid back position of a vehicle seat 11, e.g. in an autonomously driving vehicle 10.

## Claims

1. Vehicle (10) comprising a vehicle seat (11), a foot resting space (12) corresponding to the vehicle seat (11), an electronic control unit (17), an electronic user interface (15) of an infotainment system (13) and/or of a comfort functionality (14) of the vehicle (10) and a sensing unit (16), wherein the sensing unit (16) is designed to receive a user input and send a user input signal (18) to the electronic user interface (15),
**characterized in that**
the sensing unit (16) is designed to sense a position (44) and/or a predefined gesture (45) of a foot (42) as the user input, while the foot (42) lies in the foot resting space (12), and to determine the user input signal (18) in dependence on the sensed position (42) and/or gesture (43).

2. Vehicle (10) according to claim 1, wherein the sensing unit (16) comprises a position sensor (20) which is designed to determine the position (44) of the foot (42) in the foot resting space (12), based on which the electronic control unit (17) is designed to position a cursor (50) on the electronic user interface (15), wherein the position of the cursor (50) corresponds to the position (44) of the foot (42).

3. Vehicle (10) according to any of the preceding claims, wherein an outer contour (51) of a portion of the foot (42) in the foot resting space (12) is displayed on the electronic user interface (15) by means of the sensing unit (16), wherein the position of the outer contour (51) corresponds to the position (44) of the foot (42).

4. Vehicle (10) according to any of the preceding claims, wherein the sensing unit (16) is designed to sense the predefined gesture (45) of the foot (42) in the foot resting space (12), based on which the electronic control unit (17) is designed to send a functionality signal (19) to the electronic user interface (15) for triggering a function (F1, F2, F3) associated with the predefined gesture (45).

5. Vehicle (10) according to any of the preceding claims, wherein the sensing unit (16) is located in the foot resting space (12) and comprises a display panel (26), wherein the display panel (26) is designed to display at least one graphical key structure (21).

6. Vehicle (10) according to claim 5, wherein a functionality of the respective digital key structure (21) is variable in accordance with a current operation mode (38, 39) of the infotainment system (13) and/or comfort functionality (14).

7. Vehicle (10) according to any of the preceding claims, wherein the sensing unit (16) located in the foot resting space (12) and comprises a plurality of key structures (21), wherein each of the plurality of key structures (21) are designed for triggering a respective function associated with the respective key structure (21).

8. Vehicle (10) according to claim 7, wherein the electronic control unit (17) is designed to adjust an angle of the plurality of key structures (21) to the vehicle floor (30) in accordance with an angle of inclination of the vehicle seat (11) to the vehicle floor (30).

9. Vehicle (10) according to any of the preceding claims, wherein the electronic control unit (17) is designed to deactivate the sensing unit (16) by sending a deactivation signal (32), wherein during an autonomous driving situation, the electronic control unit (17) is designed to activate the sensing unit (16) by sending an activation signal (31).

10. Vehicle (10) according to any of the preceding claims, wherein the vehicle (10) comprises a docking station (27) which is designed to mechanically support the sensing unit (16).

11. Vehicle (10) according to claim 10, wherein the docking station (27) comprises a lid which is designed to cover the sensing unit (16) as a function of a covering signal sent by the electronic control unit (17), wherein the electronic control unit (17) is designed to send the covering signal according to a predefined driving situation.

## Patentansprüche

1. Fahrzeug (10), umfassend einen Fahrzeugsitz (11), einen Fußauflageraum (12), der dem Fahrzeugsitz (11) entspricht, eine elektronische Steuereinheit (17), eine elektronische Benutzeroberfläche (15) eines Infotainmentsystems (13) und/oder einer Komfortfunktionalität (14) des Fahrzeugs (10) und eine Sensoreinheit (16), wobei die Sensoreinheit (16) konstruiert ist, um eine Benutzereingabe zu empfangen und ein Benutzereingabesignal (18) an die elektronische Benutzeroberfläche (15) zu senden,
**dadurch gekennzeichnet, dass**
die Sensoreinheit (16) konstruiert ist, um eine Position (44) und/oder eine vordefinierte Geste (45) eines Fußes (42) als die Benutzereingabe zu erfassen, während der Fuß (42) im Fußauflageraum (12) liegt, und um das Benutzereingabesignal (18) anhängig von der erfassten Position (42) und/oder Geste (43) zu bestimmen.

2. Fahrzeug (10) nach Anspruch 1, wobei die Sensoreinheit (16) einen Positionssensor (20) umfasst, der konstruiert ist, um die Position (44) des Fußes (42) im Fußauflageraum (12) zu bestimmen, auf deren Grundlage die elektronische Steuereinheit (17) konstruiert ist, um einen Cursor (50) auf der elektronischen Benutzeroberfläche (15) zu positionieren, wobei die Position des Cursors (50) der Position (44) des Fußes (42) entspricht.

3. Fahrzeug (10) nach einem der vorstehenden Ansprüche, wobei eine Außenkontur (51) eines Abschnitts des Fußes (42) in dem Fußauflageraum (12) auf der elektronischen Benutzeroberfläche (15) mittels der Sensoreinheit (16) angezeigt wird, wobei die Position der Außenkontur (51) der Position (44) des Fußes (42) entspricht.

4. Fahrzeug (10) nach einem der vorstehenden Ansprüche, wobei die Sensoreinheit (16) konstruiert ist, um die vordefinierte Geste (45) des Fußes (42) in dem Fußauflageraum (12) zu erfassen, auf deren Grundlage die elektronische Steuereinheit (17) konstruiert ist, um ein Funktionalitätssignal (19) an die elektronische Benutzeroberfläche (15) zu senden zum Auslösen einer Funktion (F1, F2, F3), die der vordefinierten Geste (45) zugeordnet ist.

5. Fahrzeug (10) nach einem der vorstehenden Ansprüche, wobei die Sensoreinheit (16) in dem Fußauflageraum (12) untergebracht ist und ein Anzeigefeld (26) umfasst, wobei das Anzeigefeld (26) konstruiert ist, um mindestens eine grafische Schlüsselstruktur (21) anzuzeigen.

6. Fahrzeug (10) nach Anspruch 5, wobei eine Funktionalität der jeweiligen digitalen Schlüsselstruktur (21) je nach einer aktuellen Betriebsart (38, 39) des Infotainmentsystem (13) und/oder der Komfortfunktionalität (14) veränderbar ist.

7. Fahrzeug (10) nach einem der vorstehenden Ansprüche, wobei die Sensoreinheit (16) in dem Fußauflageraum (12) untergerbacht ist und eine Vielzahl von Schlüsselstrukturen (21) umfasst, wobei jede der Vielzahl von Schlüsselstrukturen (21) konstruiert ist, um eine jeweilige Funktion auszulösen, die der jeweiligen Schlüsselstruktur (21) zugeordnet ist.

8. Fahrzeug (10) nach Anspruch 7, wobei die elektronische Steuereinheit (17) konstruiert ist, um einen Winkel der Vielzahl von Schlüsselstrukturen (21) zum Fahrzeugboden (30) je nach einem Neigungswinkel des Fahrzeugsitzes (11) zum Fahrzeugboden (30) einzustellen.

9. Fahrzeug (10) nach einem der vorstehenden Ansprüche, wobei die elektronische Steuereinheit (17) konstruiert ist, um die Sensoreinheit (16) durch Senden eines Deaktivierungssignals (32) zu deaktivieren, wobei während einer Situation des autonomen Fahrens die elektronische Steuereinheit (17) konstruiert ist, um die Sensoreinheit (16) durch Senden eines Aktivierungssignals (31) zu aktivieren.

10. Fahrzeug (10) nach einem der vorstehenden Ansprüche, wobei das Fahrzeug (10) eine Dockingstation (27) umfasst, die konstruiert ist, um die Sensoreinheit (16) mechanisch zu stützen.

11. Fahrzeug (10) nach Anspruch 10, wobei die Dockingstation (27) einen Deckel umfasst, der konstruiert ist, um die Sensoreinheit (16) als eine Funktion eines von der elektronischen Steuereinheit (17) gesendeten Abdeckungssignals abzudecken, wobei die elektronische Steuereinheit (17) konstruiert ist, um das Abdeckungssignal je nach einer vordefinierten Fahrsituation zu senden.

## Revendications

1. Véhicule (10) comprenant un siège de véhicule (11), un espace repose-pieds (12) correspondant au siège de véhicule (11), une unité de commande électronique (17), une interface utilisateur électronique (15) d'un système de divertissement instructif (13) et/ou d'une fonctionnalité de confort (14) du véhicule (10) et une unité de détection (16), dans lequel l'unité de détection (16) est conçue pour recevoir une entrée utilisateur et envoyer un signal d'entrée utilisateur (18) à l'interface utilisateur électronique (15),
**caractérisé en ce que**
l'unité de détection (16) est conçue pour détecter une position (44) et/ou un geste prédéfini (45) d'un pied (42) en tant qu'entrée utilisateur, tandis que le pied (42) repose dans l'espace repose-pieds (12), et pour déterminer le signal d'entrée utilisateur (18) en fonction de la position détectée (42) et/ou du geste (43).

2. Véhicule (10) selon la revendication 1, dans lequel l'unité de détection (16) comprend un capteur de position (20) qui est conçu pour déterminer la position (44) du pied (42) dans l'espace repose-pieds (12), sur la base duquel l'unité de commande électronique (17) est conçue pour positionner un curseur (50) sur l'interface utilisateur électronique (15), dans lequel la position du curseur (50) correspond à la position (44) du pied (42).

3. Véhicule (10) selon l'une quelconque des revendications précédentes, dans lequel un contour extérieur (51) d'une portion du pied (42) dans l'espace repose-pieds (12) est affiché sur l'interface utilisateur électronique (15) au moyen de l'unité de détection (16), dans lequel la position du contour extérieur (51) correspond à la position (44) du pied (42).

4. Véhicule (10) selon l'une quelconque des revendications précédentes, dans lequel l'unité de détection (16) est conçue pour détecter le geste prédéfini (45) du pied (42) dans l'espace repose-pieds (12), sur la base duquel l'unité de commande électronique (17) est conçue pour envoyer un signal de fonctionnalité (19) à l'interface utilisateur électronique (15) pour déclencher une fonction (F1, F2, F3) associée au geste prédéfini (45).

5. Véhicule (10) selon l'une quelconque des revendications précédentes, dans lequel l'unité de détection (16) est située dans l'espace repose-pieds (12) et comprend un écran d'affichage (26), dans lequel l'écran d'affichage (26) est conçu pour afficher au moins une structure de clef graphique (21).

6. Véhicule (10) selon la revendication 5, dans lequel une fonctionnalité de la structure de clef numérique respective (21) est variable selon un mode de fonctionnement courant (38, 39) du système de divertissement instructif (13) et/ou de la fonctionnalité de confort (14).

7. Véhicule (10) selon l'une quelconque des revendications précédentes, dans lequel l'unité de détection (16) située dans l'espace repose-pieds (12) et comprend une pluralité de structures de clef (21), dans lequel chacune de la pluralité de structures de clef (21) est conçue pour déclencher une fonction respective associée à la structure de clef respective (21).

8. Véhicule (10) selon la revendication 7, dans lequel l'unité de commande électronique (17) est conçue pour ajuster un angle de la pluralité de structures de clef (21) par rapport au plancher de véhicule (30) selon un angle d'inclinaison du siège de véhicule (11) par rapport au plancher de véhicule (30).

9. Véhicule (10) selon l'une quelconque des revendications précédentes, dans lequel l'unité de commande électronique (17) est conçue pour désactiver l'unité de détection (16) en envoyant un signal de désactivation (32), dans lequel pendant une situation de conduite autonome, l'unité de commande électronique (17) est conçue pour activer l'unité de détection (16) en envoyant un signal d'activation (31).

10. Véhicule (10) selon l'une quelconque des revendications précédentes, dans lequel le véhicule (10) comprend une station d'accueil (27) qui est conçue pour mécaniquement supporter l'unité de détection (16).

11. Véhicule (10) selon la revendication 10, dans lequel la station d'accueil (27) comprend un couvercle qui est conçu pour couvrir l'unité de détection (16) comme une fonction d'un signal de couverture envoyé par l'unité de commande électronique (17), dans lequel l'unité de commande électronique (17) est conçue pour envoyer le signal de couverture selon une situation de conduite prédéfinie.
